# EUROPÄISCHE PATENTSCHRIFT

(11) **EP 0 602 264 B1**
(45) Veröffentlichungstag und Bekanntmachung des Hinweises auf die Patenterteilung: **03.09.1997**
(21) Anmeldenummer: 92121331.0
(22) Anmeldetag: 15.12.1992
(51) Int. Cl.: G06F 11/14

(54) **Verfahren und Anordnung zur Überwachung des Betriebs eines digitalen Schaltungssystems**
Method and arrangement for monitoring the operation of a digital circuit system
Procédé et dispositif pour surveiller l'opération d'un circuit numérique

(43) Veröffentlichungstag der Anmeldung: 22.06.1994
(73) Patentinhaber: SIEMENS AKTIENGESELLSCHAFT, 80333 München (DE)
(72) Erfinder: Buchdrucker, Johannes, Dipl.-Ing. (FH), W-8000 München 71 (DE); Danz, Patrick, Dipl.-Ing. (FH), W-8000 München 71 (DE)

(56) Entgegenhaltungen:
- WO-A-90/06555
- US-A- 4 232 377

## Beschreibung

Die Erfindung betrifft digitale Schaltungssysteme mit mehreren Bausteinen, die von einer gemeinsamen Betriebsspannung versorgt werden, und bei denen die gemeinsame Betriebsspannung auf Spannungseinbrüche überwacht wird.

Bisher ist ein Verfahren zur Überwachung der Betriebsspannung bekannt, bei dem ein Unterschreiten einer bestimmten Überwachungsschwelle erkannt wird und zu einem harten Rücksetzen (hartes Reset), d.h. einer Neuinitialisierung des gesamten digitalen Schaltungssystems, führt. Diese Neuinitialisierung hat den Verlust der gesamten innerhalb des digitalen Schaltungssystems gespeicherten Daten zur Folge.

WO-A-90006555 beschreibt eine RESET-Funktion eines Microprozessorsystems, die zwei unterschredliche Spannungsschwellen der Versorgungsspannung benutzt, um einen sicheren RESET zu erzielen.

Für die Erhöhung der Betriebsstabilität des digitalen Schaltungssystems sollte deshalb die Wahrscheinlichkeit für ein hartes Rücksetzen und den damit verbundenen Datenverlust verringert werden. Dies kann dadurch geschehen, daß die Überwachung möglichst unempfindlich gemacht wird, indem die Überwachungsschwelle möglichst niedrig gelegt wird. Eine Grenze für das Niedriglegen der Überwachungsschwelle besteht jedoch darin, daß in jedem Fall gewährleistet sein muß, daß die Überwachungsschwelle auch für den bezüglich Spannungseinbrüchen empfindlichsten Baustein des Schaltungssystems geeignet sein muß. Dies führt insbesondere bei solchen Schaltungssystemen, die bezüglich der Empfindlichkeit gegenüber Spannungseinbrüchen sehr unterschiedliche Bauelemente beinhalten, zur Einstellung einer relativ hohen Überwachungsschwelle und damit einer relativ hohen Empfindlichkeit. Diese relativ hohe Überwachungsschwelle vermindert wiederum die Betriebsstabilität des Schaltungssystems.

Der Erfindung liegt die Aufgabe zugrunde, die Betriebsstabilität eines digitalen Schaltungssystems unter den genannten Umständen gegenüber Spannungseinbrüchen zu erhöhen.

Diese Aufgabe wird durch die Merkmale des Anspruchs 1 gelöst.

Durch die Erfindung wird es ermöglicht, daß durch eine sehr empfindliche obere Spannungsschwelle bereits geringe Spannungseinbrüche erkannt werden, ohne daß dies unbedingt ein hartes Rücksetzen des digitalen Schaltungssystems zur Folge hat.

Außerdem wird durch die frühzeitige Deaktivierung des digitalen Schaltungssystems die Gefahr von Datenverfälschungen bei einem Datenaustausch zwischen den Bausteinen des Systems während des Auftretens von Spannungseinbrüchen verringert und gleichzeitig die Lebensdauer empfindlicher Bausteine erhöht.

Da der unempfindliche Überwachungsbaustein des digitalen Schaltungssystems die Ermittlung zur Entscheidung über einen nachträglichen harten Reset erst nach dem erneuten Überschreiten der ersten Spannungsschwelle durchführt, ist des weiteren gewährleistet, daß das gesamte digitale Schaltungssystem während dieser Ermittlung mit Sicherheit wieder störungsfrei arbeitet.

Dadurch, daß die untere Spannungsschwelle nur auf den unempfindlichen Überwachungsbaustein des digitalen Schaltungssystems ausgerichtet werden muß, kann diese zweite Spannungsschwelle sehr unempfindlich, d.h. niederig eingestellt werden. Dadurch wird die Wahrscheinlichkeit für einen unbedingten harten Reset des gesamten digitalen Schaltungssystems erheblich verringert und damit die Betriebsstabilität des digitalen Schaltungssystems erheblich erhöht.

Eine Ausführungsform der Erfindung ist durch Anspruch 2 angegeben. Durch diese Ausführungsform wird vermieden, daß die Betriebsstabilität durch unkritische Spannungsschwankungen verschlechtert wird. Außerdem kann eine Aussage über die Stabilität der Versorgungsspannung an ein übergeordnetes Überwachungssystem gemeldet werden, wenn es sich bei dem erfindungsgemäßen digitalen Schaltungssystem um ein Teilsystem eines größeren Gesamtsystems, z.B. eines Vermittlungssystems, handelt.

Im folgenden wird die Erfindung anhand der Zeichnung näher erläutert.

FIG 1 zeigt ein beispielhaftes microprozessorunterstütztes Schaltungssystem sowie eine erfindungsgemäße Zusatzbeschaltung.
FIG 2 zeigt die erfindungsgemäße Unterscheidung zwischen drei verschieden starken Spannungseinbrüchen der Betriebsspannung.

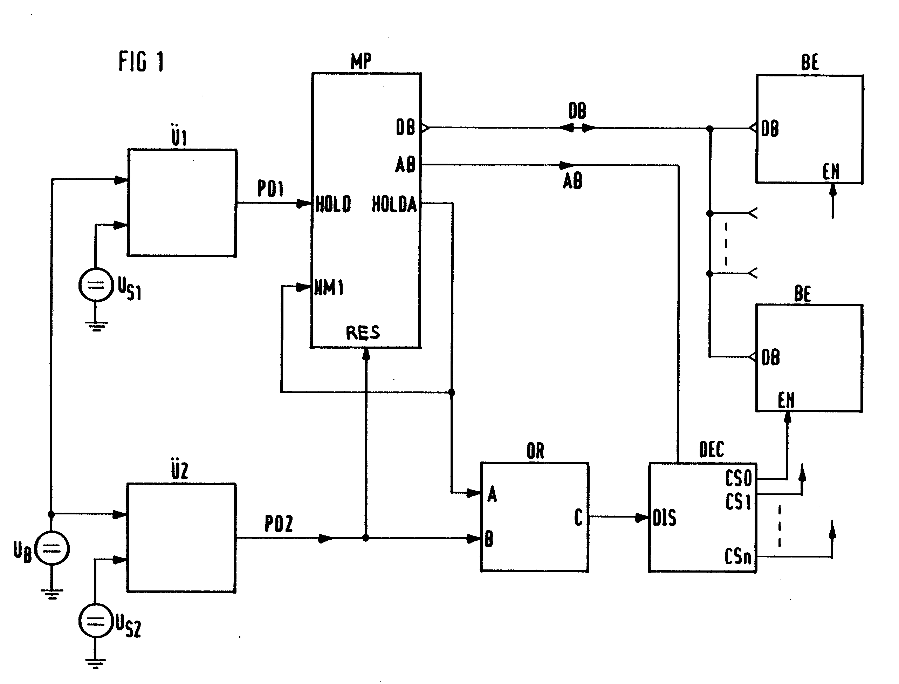

FIG 1 zeigt ein beispielhaftes microprozessorunterstütztes Schaltungssystem sowie eine erfindungsgemäße Zusatzbeschaltung. Das microprozessorunterstützte Schaltungssystem umfaßt einen Microprozessor MP, einen Datenbus DB, am Datenbus angeschlossene Bausteine BE, einen Adreßbus AB und eine am Adreßbus angeschlossene Decodierschaltung DEC. Die erfindungsgemäße Zusatzbeschaltung umfaßt eine erste Überwachungseinrichtung Ü1 zur Überwachung einer ersten oberen Spannungsschwelle U_{S1}, eine zweite Überwachungseinrichtung Ü2 zur Überwachung einer zweiten unteren Spannungsschwelle U_{S2} und eine ODER-Verknüpfungsschaltung OR. Da die Technologie des Microprozessors bezüglich Spannungseinbrüchen relativ unempfindlich ist, wird dieser hier als unempfindlicher Überwachungsbaustein mitverwendet.

Die erste Überwachungseinrichtung Ü1 vergleicht eine Betriebsspannung U_{B} mit der frei einstellbaren ersten Spannungsschwelle U_{S1} (obere Spannungsschwelle). Ein erstes Ergebnissignal PD1 dieses Vergleichs wird dem Microprozessor an dessen HOLD-Eingang zugeführt. Signalisiert das Ergebnissignal PD1 ein Unterschreiten der ersten Spannungsschwelle U_{S1}, so generiert der Microprozessor nach Beendigung des laufenden Befehlszyklusses ein Bestätigungssignal HOLDA und setzt seinen internen Betriebszustand auf inaktiv. In diesem Zustand sind die Steuersignale sowie der Datenbus DB und der Adreßbus AB des Microprozessors im hochohmigen Zustand. Das Bestätigungssignal HOLDA setzt die Decodierschaltung DEC, dessen Ausgang auf den Deaktivierungseingang DIS der Decodierschaltung wirkt, in den inaktiven Zustand. Über die Ausgangssignale der Decodierschaltung werden damit auch sämtliche am Datenbuß angeschlossenen Bauelemente über deren Eingänge EN deaktiviert. Damit ist jeglicher Datenaustausch über die Busse des digitalen Schaltungssystems gestoppt und somit kein Auftrteten eines Buskonfliktes mehr möglich. Dieses sofortige Deaktivieren des digitalen Schaltungssystems, auch bei leichten Spannungseinbrüchen, und das damit verbundene Verhindern von Buskonflikten verringert die durch Buskonflikte bedingte Überlastung einzelner Bauelemente und damit deren Ausfallwahrscheinlichkeit.

Zusätzlich wird durch das Bestätigungssignal HOLDA über einen Interrupteingang NMI der nichtmaskierbare Interrupt des Microprozessors gesetzt. Nach der Rückkehr der Betriebsspannung in den normalen Spannungsbereich oberhalb der ersten Spannungsschwelle wird auf Grund der Änderung des ersten Ergebnissignals PD1 das Bestätigungssignal HOLDA zurückgenommen und erst jetzt die Interruptroutine des nichtmaskierbaren Interrupts gestartet. Dadurch wird verhindert, daß ein zu frühzeitiges Starten der Interruptroutine Datenverfälschungen zur Folge hat.

Das Starten der genannten Interruptroutine erfolgt jedoch nur dann, wenn der Spannungseinbruch nicht zu einem Unterschreiten der zweiten Überwachungsschwelle führt. Nur in diesem Fall braucht der Microprozessor aufgrund seiner relativen Unempfindlichkeit nicht durch die zweite Überwachungseinrichtung rückgesetzt zu werden und kann dann nach der Rückkehr der Betriebsspannung in den normalen Spannungsbereich seinen Betrieb mit der Abarbeitung der genannten Interruptroutine störungsfrei fortsetzen.

Die Hauptaufgabe der Interruptroutine besteht darin, die Inhalte der Initialisierungsregister der übrigen Bausteine des Schaltungssystems auf Verfälschungen zu überprüfen und abhängig vom Ergebnis dieser Überprüfung entweder das System in den Normalbetriebszustand überzuführen, oder einen harten Reset und eine damit verbundene neue Initialisierung sämtlicher Bausteine des digitalen Schaltungssystems auszulösen.

Eine weitere Aufgabe der Interruptroutine besteht darin, leichte Spannungseinbrüche, d.h. Spannungseinbrüche, die keinen harten Reset zur Folge hatten, zu speichern und bei einem festgestellten Überschreiten einer bestimmten Häufigkeit solcher leichter Spannungseinbrüche eine Meldung an ein übergeordnetes Überwachungssystem zu senden oder ein Rücksetzen des digitalen Schaltungssystems auszulösen. Dadurch wird gewährleistet, daß instabiles Verhalten der Betriebssspannung nicht unentdeckt bleibt und das übergeordnete Überwachungssystem gezielt Maßnahmen ergreifen kann.

Die zweite Überwachungseinrichtung vergleicht die Betriebsspannung mit der ebenfalls frei einstellbaren zweiten Spannungsschwelle U_{S2} (untere Spannungsschwelle). Ein Unterschreiten dieser Spannungsschwelle hat über das zweite Ergebnissignal PD2, das auf den Rücksetzeingang RES des Microprozessors und den Deaktivierungseingang DIS der Decodierschaltung wirkt, ein sofortiges Rücksetzen des Microprozessors sowie ein Deaktivieren der Decodierschaltung zur Folge. Über die Ausgangssignale der Decodierschaltung werden damit auch sämtliche, am Datenbus angeschlossene Bauelemente über deren Eingänge EN deaktiviert.

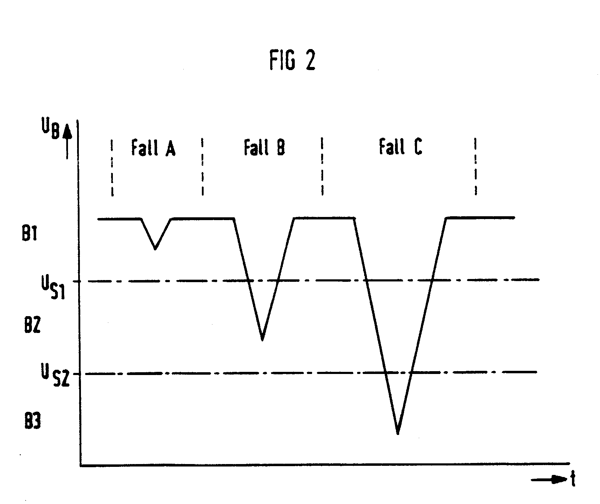

FIG 2 zeigt die erfindungsgemäße Unterscheidung zwischen drei verschieden starken Spannungseinbrüchen der Betriebsspannung U_{B}. Durch die zwei frei einstellbaren Spannungsschwellen U_{S1} und U_{S2} werden zwei Überwachungsgrenzen definiert, die den Betriebsspannungsbereich in einen normalen ersten Bereich B1 (Fall A), einen zweiten kritischen Bereich B2 (Fall B) und einen undefinierten dritten Bereich B3 (Fall C) einteilen. Diese zweistufige Überwachung ermöglicht eine sehr viel niedrigere zweite Spannungsschwelle des microprozessorunterstützten Schaltungssystems, wodurch die Betriebsstabilität des digitalen Schaltungssystems erheblich erhöht wird.

## Patentansprüche

1. Verfahren zur Überwachung des Betriebs eines digitalen Schaltungssystems, demgemäß
a) bei Unterschreiten einer unteren Überwachungsschwelle ein Rücksetzen des digitalen Schaltungssystems ausgelöst wird,
**dadurch gekennzeichnet**, daß
b) bei Unterschreiten einer oberen Überwachungsschwelle eine Deaktivierung des digitalen Schaltungssystems ausgelöst wird,
c) nach Beendigung eines Spannungseinbruchs, der zwischen der oberen und unteren Überwachungsschwelle lag, von einem bezüglich dieser Art von Spannungseinbruch unempfindlichen Überwachungsbaustein (MP) des digitalen Schaltungssystems überprüft wird, ob die Inhalte von die Funktion der übrigen Bausteine festlegender Register durch den Spannungseinbruch verfälscht worden sind,
d) wenn eine Verfälschung festgestellt wird, auch hier ein Rücksetzen des digitalen Schaltungssystems ausgelöst wird,
e) wenn keine Verfälschung festgestellt wird, der Normalbetrieb des digitalen Schaltungssystems dagegen wieder aufgenommern wird.

2. Verfahren gemäß Anspruch 1,
**dadurch gekennzeichnet**, daß
a) Spannungseinbrüche, die zwischen der oberen und unteren Überwachungsschwelle liegen und nicht zu einem Rücksetzen des digitialen Schaltungssystems führen, innerhalb des Schaltungssystems registriert werden,
b) bei Überschreiten einer bestimmten Häufigkeit solcher Spannungseinbrüche ein Rücksetzen des digitalen Schaltungssystems ausgelöst und/oder eine entsprechende Meldung an ein übergeordnetes Überwachungssystem abgegeben wird.

3. Anordnung zur Durchführung des Verfahrens nach Anspruch 1,
**gekennzeichnet durch**
a) eine erste Überwachungseinrichtung (Ü1), die das Unterschreiten der genannten oberen Überwachungsschwelle überwacht und in Abhängigkeit davon ein entsprechendes erstes Ergebnissignal (PD1) an einen bezüglich Spannungseinbrüchen unempfindlichen Überwachungsbaustein (MP) abgibt,
b) eine zweite Überwachungseinrichtung (Ü2), die das Unterschreiten der genannten unteren Überwachungsschwelle überwacht und in Abhängigkeit davon ein unbedingtes Rücksetzen des digitalen Schaltungssystems steuert,
c) den Überwachungsbaustein (MP), der bei Unterschreiten der ersten oberen Überwachungsschwelle eine Deaktivierung des digitalen Schaltungssystems auslöst, und der nach Beendigung eines Spannungseinbruchs, der zwischen der ersten und zweiten Überwachungsschwelle lag, überprüft, ob die Inhalte der die Funktion der übrigen Bausteine des digitalen Schaltungssystems festlegender Register durch den Spannungseinbruch verfälscht wurden, und der das digitale Schaltungssystem in Abhängigkeit davon entweder in den Normalbetriebszustand zurückführt, oder ein Rücksetzen des digitalen Schaltungssystems auslöst.

4. Anordnung nach Anspruch 3,
**dadurch gekennzeichnet**, daß
a) es sich bei dem digitalen Schaltungssystem um ein microprozessorgesteuertes Schaltungssystem handelt,
b) ein Microprozessor (MP) den bezüglich eines Spannungseinbruchs bis zur zweiten Überwachungsschwelle unempfindlichen Überwachungsbaustein darstellt.

## Claims

1. Method for monitoring the operation of a digital circuit system according to which
a) a resetting of the digital circuit system is triggered when a lower monitoring threshold is violated,
characterized in that
b) a deactivation of the digital circuit system is triggered when an upper monitoring threshold is violated,
c) after the end of a voltage dip which was located between the upper and lower monitoring threshold, a monitoring chip (MP), which is insensitive to this type of voltage dip, of the digital circuit system checks whether the contents of registers determining the operation of the remaining chips have been corrupted by the voltage dip,
d) if a corruption is found, a resetting of the digital circuit system is also triggered in this case,
e) if no corruption is found, in contrast, the normal operation of the digital circuit system is resumed.

2. Method according to Claim 1, characterized in that
a) voltage dips which are located between the upper and lower monitoring threshold and do not lead to the digital circuit system being reset are registered within the circuit system,
b) when a certain frequency of such voltage dips is exceeded, a resetting of the digital circuit system is triggered and/or a corresponding message is output to a higher-level monitoring system.

3. Arrangement for carrying out the method according to Claim 1, characterized by
a) a first monitoring device (Ü1), which monitors the violation of the said upper monitoring threshold and in dependence thereon outputs a corresponding first event signal (PD1) to a monitoring chip (MP), which is insensitive to voltage dips,
b) a second monitoring device (Ü2) which monitors the violation of the said lower monitoring threshold and in dependence thereon controls an unconditional resetting of the digital circuit system,
c) the monitoring chip (MP), which, when the first upper monitoring threshold is violated, triggers a deactivation of the digital circuit system and which, after a voltage dip has ended which was located between the first and second monitoring threshold, checks whether the contents of the registers determining the operation of the remaining chips of the digital circuit system have been corrupted by the voltage dip and which, in dependence thereon, either returns the digital circuit system into its normal operating state or triggers a resetting of the digital circuit system.

4. Arrangement according to Claim 3, characterized in that
a) the digital circuit system is a microprocessorcontrolled circuit system,
b) a microprocessor (MP) represents the monitoring chip which is insensitive to a voltage dip up to the second monitoring threshold.

## Revendications

1. Procédé de contrôle du fonctionnement d'un système de circuit numérique, suivant lequel
a) on déclenche, lors du passage sous un seuil de contrôle inférieur, une réinitialisation du système de circuit numérique,
caractérisé en ce que
b) on déclenche, lors du passage sous un seuil de contrôle supérieur, une désactivation du système de circuit numérique,
c) on contrôle, après la fin d'une baisse de tension, qui se trouve entre le seuil de contrôle supérieur et le seuil de contrôle inférieur par un module (MP) de contrôle insensible à ce genre de chute de tension du système de circuit numérique, si les contenus de registres fixant la fonction des autres modules ont été altérés par la baisse de tension,
d) si l'on constate une altération, on déclenche également ici une réinitialisation du système de circuit numérique,
e) si on ne constate pas d'altération, on reprend au contraire le fonctionnement normal du système de circuit numérique.

2. Procédé suivant la revendication 1,
caractérisé en ce que
a) on enregistre des chutes de tension, qui se trouvent entre le seuil de contrôle supérieur et le seuil de contrôle inférieur et qui ne provoquent pas de réinitialisation du système de contrôle numérique, à l'intérieur du système de circuit,
b) on déclenche une réinitialisation du système de circuit numérique et/ou on fournit un message correspondant à un système de contrôle de rang hiérarchique supérieur lors du passage au-dessus d'une fréquence d'apparition déterminée de baisses de tension de ce genre.

3. Dispositif pour la mise en oeuvre du procédé suivant la revendication 1, caractérisé par
a) un premier dispositif (Ü1) de contrôle, qui contrôle le passage sous ledit seuil de contrôle supérieur et qui fournit, en fonction de celui-ci, un premier signal de résultat correspondant (PD1) à un module (MP) de contrôle insensible aux baisses de tension,
b) un second dispositif (Ü2) de contrôle, qui contrôle le passage sous ledit seuil inférieur de contrôle et qui commande en fonction de celui-ci une réinitialisation inconditionnelle du système de circuit numérique,
c) le module (MP) de contrôle, qui déclenche, lors du passage sous le premier seuil de contrôle supérieur, une désactivation de système de circuit numérique et qui contrôle, après la fin d'une baisse de tension qui se trouvait entre le premier et le second seuil de contrôle, si les contenus des registres fixant la fonction des modules restants du système de circuit numérique ont été altérés par la baisse de tension et qui, soit remet le système de circuit numérique dans l'état de fonctionnement normal en fonction de cela, soit déclenche une réinitialisation du système de circuit numérique.

4. Dispositif suivant la revendication 3,
caractérisé en ce que
a) le système de circuit numérique est un système de circuit commandé par microprocesseur,
b) un microprocesseur (MP) représente le module de contrôle insensible à une chute de tension allant jusqu'au second seuil de contrôle.
